(19) Europäisches Patentamt / European Patent Office / Office européen des brevets

(11) **EP 3 891 764 B1**

(12) **FASCICULE DE BREVET EUROPEEN**

(45) Date de publication et mention de la délivrance du brevet:
**07.06.2023 Bulletin 2023/23**

(21) Numéro de dépôt: **19816645.6**

(22) Date de dépôt: **04.12.2019**

(51) Classification Internationale des Brevets (IPC):
**G21F 9/04** $^{(2006.01)}$    **G21F 9/06** $^{(2006.01)}$

(52) Classification Coopérative des Brevets (CPC):
**G21F 9/04; G21F 9/06**

(86) Numéro de dépôt international:
**PCT/EP2019/083739**

(87) Numéro de publication internationale:
**WO 2020/115167 (11.06.2020 Gazette 2020/24)**

(54) **PROCEDE ET INSTALLATION DE TRAITEMENT D'EFFLUENTS AQUEUX ISSUS DU CIRCUIT PRIMAIRE D'UNE CENTRALE NUCLEAIRE COMPRENANT DE L'ACIDE BORIQUE**

VERFAHREN UND VORRICHTUNG ZUM BEHANDELN VON WÄSSRIGEN ABWÄSSERN AUS DEM PRIMÄRKREISLAUF EINES KERNKRAFTWERKES DIE BORSÄURE ENTHALTEN

PROCESS AND INSTALLATION FOR TREATMENT OF AQUEOUS EFFLUENTS OF THE PRIMARY CIRCUIT OF A NUCLEAR POWER STATION CONTAINING BORIC ACID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2018 FR 1872375**

(43) Date de publication de la demande:
**13.10.2021 Bulletin 2021/41**

(73) Titulaires:
• **Electricité de France**
  **75008 Paris (FR)**
• **CENTRE NATIONAL DE LA RECHERCHE SCIENTIFIQUE (CNRS)**
  **75016 Paris (FR)**
• **Université de Lorraine**
  **54000 Nancy (FR)**

(72) Inventeurs:
• **NEVEUX, Thibaut**
  **92000 NANTERRE (FR)**
• **BAILLEUL, Eve**
  **69006 LYON (FR)**
• **CASTEL, Christophe**
  **54500 VANDOEUVRE-LES-NANCY (FR)**
• **FAVRE, Eric**
  **54000 NANCY (FR)**

(74) Mandataire: **Regimbeau**
  **20, rue de Chazelles**
  **75847 Paris Cedex 17 (FR)**

(56) Documents cités:
**DE-A1- 3 605 338    JP-A- H0 568 974**

• **BÁRTOVÁ SÁRKA ET AL: "Reverse osmosis for the recovery of boric acid from the primary coolant at nuclear power plants", NUCLEAR ENGINEERING AND DESIGN, vol. 300, 11 février 2016 (2016-02-11), pages 107-116, XP029464702, ISSN: 0029-5493, DOI: 10.1016/J.NUCENGDES.2016.01.018 cité dans la demande**
• **Ulrika Bark ET AL: "BATMAN -Best Available Technique Minimising All Nuclides This report approved 2006-04-18 Lars-Gunnar Lindfors Scientific Director", , 18 avril 2006 (2006-04-18), XP055634257, Extrait de l'Internet: URL:https://www.ivl.se/download/18.343dc99 d14e8bb0f58b74cd/1445515619453/B1673.pdf [extrait le 2019-10-21]**

**Description**

**DOMAINE DE L'INVENTION**

La présente invention concerne le traitement d'effluents aqueux provenant du circuit primaire des centrales nucléaires utilisant de l'eau comme caloporteur et du bore comme poison neutronique, présent sous forme d'acide borique dilué dans l'eau.

Plus précisément, la présente invention concerne la séparation de l'acide borique de l'eau du circuit primaire d'une centrale nucléaire.

**ETAT DE LA TECHNIQUE**

Une centrale nucléaire est principalement constituée d'une part, d'un premier circuit fermé, appelé circuit primaire comprenant un réacteur nucléaire traversé par l'eau à rôle caloporteur. Cette eau est mise en circulation par des pompes.

L'eau est chauffée à environ 320° C reste à l'état liquide car à saturation sous pression à 155 bars. Ces calories sont cédées au travers d'un échangeur de chaleur parcouru par un second circuit de l'eau dit circuit secondaire.

Cette eau devenant vapeur est destinée à actionner une turbine elle-même entraînant un alternateur pour produire de l'électricité.

La vapeur une fois détendue est condensée au travers d'un second échangeur dit condenseur refroidi par une source froide indépendante.

Cette eau à l'état liquide mue par des pompes suit un autre cycle en retraversant l'échangeur de chaleur.

Il est bien connu de l'état de la technique que l'eau du circuit primaire des centrales nucléaires peut contenir de manière non désirable des composés radiochimiques comme notamment l'acide borique.

Un des objectifs du traitement des effluents est la séparation de l'eau de ce composé radiochimique. Généralement, l'eau du circuit primaire contient également des composés gazeux comme le Xénon, le Krypton, du diazote, du dihydrogène, du dioxygène ou encore des composés iodés gazeux. Il est également généralement souhaité de séparer également ces composés gazeux. La séparation des composés gazeux peut en particulier avoir lieu en amont de la séparation de l'acide borique.

L'eau ainsi récupérée peut être recyclée et les composés traités, confinés et éliminés par des processus dédiés.

Différents processus ont déjà été proposés pour assurer le traitement de l'acide borique précités.

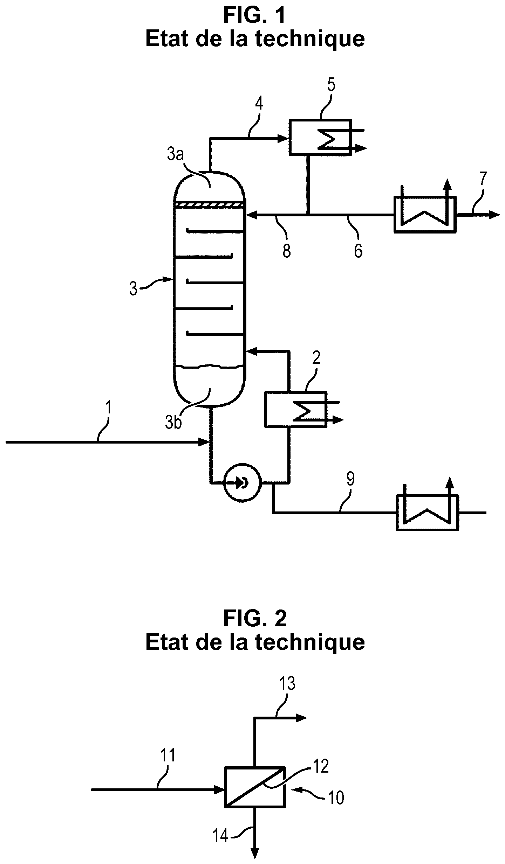

En pratique, on utilise aujourd'hui dans les centrales nucléaires en fonctionnement un procédé thermique d'évaporation dont le principe général est présenté en figure 1.

Les effluents à traiter, dits « effluents primaires » proviennent de décharges volontaires de fluide provenant du circuit primaire. De telles décharges peuvent avoir lieu lors du fonctionnement normal ou lors d'arrêt du réacteur. Après des étapes préliminaires de traitement, notamment passage sur filtres, résines échangeuses d'ions et dégazeur, les effluents contiennent toujours du Bore qui doit être concentré de manière à produire simultanément de l'eau borée concentrée et de l'eau purifiée.

L'effluent à traiter 1 est alimenté vers un évaporateur pour réaliser une séparation eau / acide borique. L'effluent est évaporé à travers un bouilleur 2 et alimente la colonne de distillation 3. Dans la colonne 3, la différence de température d'ébullition entre l'eau et l'acide borique permet de générer un courant de vapeur enrichi en eau en tête de colonne 3a et un courant liquide enrichi en acide borique en pied de colonne 3b. Le gaz 4 s'échappant en tête de colonne 3a est condensé intégralement dans un condenseur 5. Une fraction 6 de ce courant est extrait et refroidi pour former l'eau purifiée 7. L'excédent 8 sert de reflux à la colonne de distillation 3. De façon similaire, une fraction 9 de l'acide borique concentrée est extraite puis refroidie. Les dimensions caractéristiques sont typiquement de l'ordre de 10 m de hauteur et 3 m de diamètre pour la colonne de d'évaporation.

Une recirculation (non présentée sur la figure 1) permet de recycler une partie du débit des produits (6, 9) en amont de chaque colonne 3 pour satisfaire les contraintes hydrauliques dans les colonnes. Le contrôle des températures, pressions opératoires, ainsi que des débits liquides, permet de satisfaire les objectifs de pureté et de contraintes hydrauliques.

Les procédés thermiques ont pour principaux avantages d'être très matures. Le procédé est en place sur nombre de centrales nucléaires en fonctionnement. Un grand retour d'expérience est disponible. D'autre part, le procédé est constitué de matériaux durables (acier). Il ne génère pas de déchet radioactif durant l'exploitation.

Cependant, la mise en oeuvre de procédé thermique requiert des installations de dimensions importantes et conduit à des opérations complexes notamment en termes de démarrage et de flexibilité, ainsi que des coûts élevés résultant notamment de la taille des installations, de leur consommation énergétique et de l'ensemble des composés connexes nécessaires.

Dans ce contexte on a tenté d'améliorer la situation en proposant une solution alternative à base de traitement mettant en oeuvre un procédé membranaire, c'est-à-dire utilisant une membrane adaptée pour assurer une séparation du composé radiochimique à partir de l'effluent issu du circuit primaire des centrales nucléaires.

On trouvera notamment des informations sur ces solutions alternatives envisagées dans les documents US 3380889, « Processing of nuclear power plant waste streams containing boric acid » (IAEA-TECDOC-911 - October 1996), « Reverse osmosis for the recovery of boric acid from the primary coolant of nuclear power plants » (Sarka Bartova - Nuclear Engineering and Design 300 (2016 107-116), ou encore dans le document « Best Available Technique Minimising All Nuclides » (Ulrika Bark, Rune Dergström - April 2006 - Swedish Environmental Research Institute).

Globalement les documents précités relatent des tests sur la solution alternative de traitement membranaire utilisant un module d'osmose inverse pour la séparation de l'acide borique. Cependant, si les modules d'osmose inverse ont démontré leur intérêt industriel pour la séparation de l'acide borique à une échelle industrielle, jusqu'ici les tentatives d'utilisation de modules d'osmose inverse pour la séparation de l'acide borique dans des effluents issus du circuit primaire d'une centrale nucléaire n'ont pas donné totalement satisfaction et n'ont par conséquent pas été mis en oeuvre.

Le document JP H05 68974 A décrit un procédé de traitement d'effluents aqueux provenant d'un circuit primaire d'une centrale nucléaire mettant en oeuvre une séparation de l'acide borique à l'aide d'une membrane d'osmose inverse et l'utilisation d'un assemblage multi-étage composé de trois modules d'osmose inverse agencés en série.

Dans ce texte, on utilisera indifféremment les termes module d'osmose inverse et module membranaire.

Ce manque de développement pour les techniques de traitement membranaires semble dû essentiellement au fait que l'on n'a pas su atteindre jusqu'ici avec ces techniques les concentrations requises avec une production d'acide borique concentré -typiquement 7500 $mg_B$/L - une production d'eau très peu concentrée en acide borique - typiquement < 5 $mg_B$/L - avec une alimentation fluctuante en effluent aqueux dans le temps lors de l'exploitation et l'arrêt du réacteur. Les concentrations en acide borique sont généralement exprimées en concentration massique de l'élément chimique Bore (« 1 $mg_B$/L » désigne un milligramme de l'élément Bore par litre de solution) et non en concentration massique d'acide borique, le passage de l'une à l'autre se fait au moyen des masses molaires respectives de l'élément Bore et de la molécule d'acide borique.

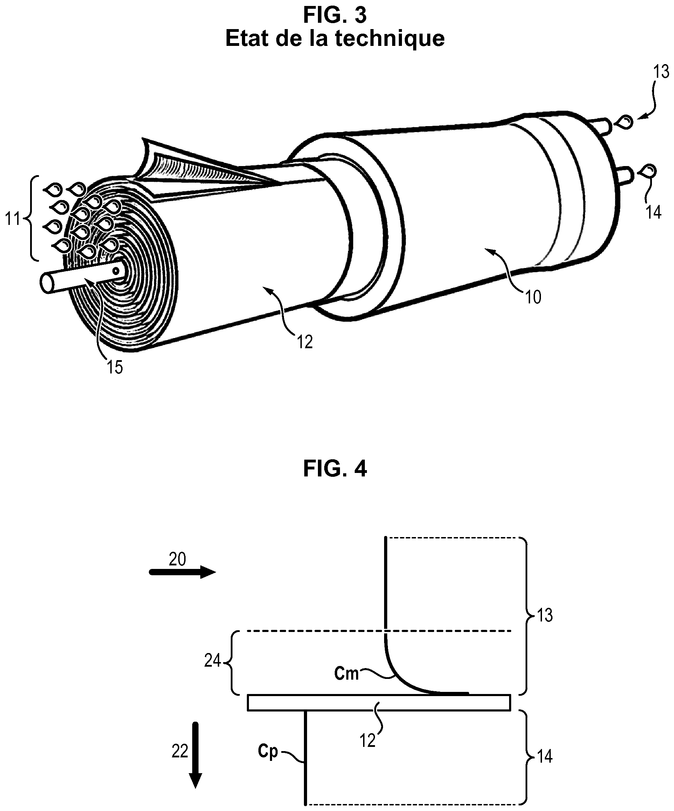

On a représenté schématiquement sur les figures 2 et 3, le concept de traitement membranaire par module d'osmose inverse.

On distingue sur les figures 2 et 3 un module d'osmose inverse 10 alimenté par un effluent aqueux 11. Une membrane d'osmose inverse 12 laisse passer un perméat 14 qui est un liquide moins concentré en acide borique que l'effluent aqueux 11 et retient un rétentat 13 qui est un liquide plus concentré en acide borique que l'effluent aqueux 11. La figure 3 représente un agencement classique selon une structure spiralée de la membrane 12. Des membranes planes sont enroulées autour d'un tube collecteur 15. L'eau à traiter est distribuée à une extrémité du module dans les interstices entre 2 membranes planes ; l'eau qui a percolé à travers les membranes est collectée dans le tube central (perméat 14) et l'eau résiduelle (rétentat 13) est collectée à l'autre extrémité du module.

## EXPOSE DE L'INVENTION

La présente invention a maintenant pour but de proposer un nouveau procédé et une nouvelle installation qui perfectionnent l'état de la technique.

La présente invention a notamment pour but de proposer des moyens qui améliorent la situation en termes de :

- compacité,
- consommation énergétique, et
- coût d'investissement.

Les objectifs précités sont atteints selon la présente invention grâce à un procédé de traitement d'effluents aqueux provenant du circuit primaire d'une centrale nucléaire mettant en oeuvre une séparation d'acide borique à l'aide d'une membrane d'osmose inverse comprenant des étapes consistant à traiter les effluents à l'aide d'un assemblage multi-étage composés de modules d'osmose inverse comportant une membrane présentant un taux de réjection élevé en Bore, agencés en parallèle et en série et des recyclages des produits intermédiaires en différents points du procédé.

La présente invention permet ainsi de résoudre notamment le problème posé grâce à l'utilisation d'une membrane présentant un taux de réjection élevé en Bore.

A ce stade, on notera que l'acide borique étant un acide faible, caractérisé par un pKa (constante d'acidité) de 9,2 à 25°C, il est présent majoritairement sous forme moléculaire ($H_3BO_3$) à pH inférieur au pKa, et sous forme ionique (ion borate, $H_2BO_3^-$) au-delà. Les effluents à traiter ayant un pH inférieur au pKa, l'osmose inverse conventionnelle présente un taux de réjection du Bore faible (tel que présenté dans les documents IAEA-TECDOC-911 ou « Best Available Technique Minimising All Nuclides ») autour de 60-80%, alors que le taux de réjection des sels, c'est-à-dire des espèces ioniques dissociées en solution dans l'effluent aqueux, est supérieur à 99%.

L'osmose inverse est utilisée pour concentrer des effluents industriels (dont radioactifs), et limiter la quantité

**EP 3 891 764 B1**

de Bore dans l'eau potable dans le dessalement d'eau de mer (pour passer de 5 à 0,5 ppm).

On se propose ici de combiner l'utilisation d'une membrane d'osmose inverse présentant un taux de réjection élevé en Bore (industriellement utilisée dans l'industrie du dessalement d'eau de mer) à un procédé multi-étagé avec recyclages pour traiter une alimentation de concentration fortement variable dans le temps (2000 à 50 ppm) et atteindre des objectifs de traitement (conjointement un produit concentré en acide borique à 7500 ppm et une eau purifiée à moins de 5 ppm).

Il est à noter que les conditions opératoires ainsi que les objectifs de séparation sont drastiquement différents entre le dessalement d'eau de mer et les besoins de l'invention. En particulier, la situation pour le dessalement d'eau de mer est plus favorable en comparaison à la situation du traitement d'effluents primaires car le pH est plus élevé, les concentrations en acide borique sont nettement inférieures à quelques $mg_B/L$ et il n'y a qu'un objectif côté perméat qui est d'abaisser la concentration seulement d'un facteur 10.

Les effluents à traiter sont bien plus concentrés en acide borique (variation typique de 1800 à 50 $mg_B/L$ selon l'opération du réacteur) et il y a deux objectifs d'une part côté rétentat de produire de l'acide borique concentré (7500 $mg_B/L$, soit proche du point de cristallisation de l'acide borique), et d'autre part côté perméat de produire de l'eau purifiée (<5 $mg_B/L$).

Par rapport à la concentration d'effluents radioactifs - voir les tests à Chalk River (*IAEA-TECDOC-911)* et en laboratoire (« *Reverse osmosis for the recovery of boric acid from the primary coolant of nuclear power plants* ») - l'objectif visé dans ces documents est de produire un déchet correspondant à une très forte concentration d'acide borique (de 70 à 90 $g_B/L$) pour réduire le volume d'effluent radioactif à traiter. La concentration en acide borique visée dans le cadre de l'invention est largement inférieure à ces très fortes concentrations de 70 à 90 $g_B/L$.

Par rapport aux essais réalisés sur la centrale de Ringhlas (« *Best Available Technique Minimising All Nuclides* »), les tests furent réalisés avec des membranes qui n'étaient pas sélectives vis-à-vis de l'acide borique, et le dispositif testé (2 modules unitaires en parallèle) ne permettait pas de produire de l'eau purifiée à une concentration suffisamment basse en acide borique, ni un acide borique à une concentration suffisamment élevée.

Pour une alimentation en Bore peu concentrée (par exemple 50 $mg_B/L$), il est nécessaire d'atteindre un facteur de concentration de l'ordre de 150 au rétentat (7500/50) et un facteur de dilution 10 au perméat (50/5). Inversement, pour une alimentation en Bore concentrée (par exemple 1800 $mg_B/L$), il est nécessaire d'atteindre un facteur de concentration de l'ordre de 4 au rétentat (7500/1800) et un facteur de dilution de 360 au perméat (1800/5). Si au cours du temps la concentration en acide borique fluctue, l'effort de séparation n'est alors pas localisé au niveau du même produit au cours du temps entre le rétentat (effort pour les basses concentrations en acide borique) et le perméat (effort pour les hautes concentrations en acide borique).

Le double objectif correspondant à deux produits de la séparation, et la grande plage de variation temporelle de la concentration de l'alimentation complexifie grandement la proposition d'une unique solution technique.

Selon d'autres caractéristiques avantageuses de l'invention :

- les étapes de séparation sont adaptées pour assurer une concentration de l'acide borique de l'ordre de 7 500 $mg_B/L$ et opérer une purification d'eau de l'ordre de 5 $mg_B/L$.
- le procédé de traitement opère sur des effluents à traiter et ayant un PH très inférieur au Pka.
- le taux de rejection en Bore des membranes est supérieur à 80%, de préférence supérieur à 90%.
- les membranes sont composées d'un support, par exemple en polysulfone, recouvert d'un film dense offrant une sélectivité vis-à-vis du Bore, par exemple en polyamide ou polyisobutylène.
- les membranes sont formées d'un matériau du type organique, telles que des membranes à base de polymère asymétrique ou composite de type polyamide, polyimide, polysulfone, polymère fluoré, polymère silicone, polymère vinylique, polymère cellulosique, inorganique tel que tamis moléculaires carbonés, graphènes, zeolithes, silice poreuse native ou fonctionnalisée, en coure des structures homogènes ou hétérogènes, telles que des membranes chargées, notamment avec une phase dispersée de type nanoparticules ou polymères fonctionnels du type aquaporines ou des matériaux ayant subi un traitement en surface pour améliorer les performances, par exemple à base de fluoration, bromination, sulfonation.
- le procédé met en oeuvre d'une part, une zone d'enrichissement en acide borique et une zone appauvrissement en acide borique, chacune composée de plusieurs modules membranaires, la zone d'enrichissement étant chargée d'augmenter progressivement la concentration d'acide borique et étant formée d'un ou plusieurs étages en série pour atteindre la concentration d'acide borique recherchée, tandis que la zone d'appauvrissement opère une réduction progressive de la concentration d'acide borique et est composée d'un ou plusieurs étages en série pour atteindre la concentration d'eau purifiée requise.
- chaque étage se compose de plusieurs modules en série adaptée pour traiter le débit circulant à chaque étage.
- dans la zone d'enrichissement, le perméat de chaque module est recyclé après mélange avec l'alimentation du procédé ou après mélange avec l'alimentation d'un autre module du procédé ou à l'une des sorties du procédé.
- dans la zone d'appauvrissement le rétentat de chaque module est recyclé après mélange avec l'alimentation du

4

procédé ou après mélange avec l'alimentation d'un autre module du procédé ou à l'une des sorties du procédé.

- les rétentats du modèle dans la zone d'enrichissement contournent au moins certains modules en série situés en amont pour rejoindre directement la sortie du procédé correspondant à l'acide borique concentré.
- les perméats des modules dans la zone d'enrichissement contournent au moins un certain module en série situé en amont pour rejoindre directement la sortie du procédé correspondant à l'eau purifiée.

Le procédé comprend des étapes consistant à mesurer la concentration en acide borique sur des points sélectionnés de l'installation et opérer sur la base du résultat des mesures de concentration une étape de pilotage des modules de l'assemblage actif afin d'optimiser la concentration d'acide borique en sortie.

- les mesures de concentration sont opérées en entrée et en sortie de l'assemblage de modules membranaires.
- les mesures de concentration sont opérées sur des points intermédiaires de l'assemblage de modules membranaires.
- la concentration en acide borique est mesurée directement, par exemple par dosage.
- la concentration d'acide borique est mesurée indirectement, par exemple via le PH.
- la concentration en acide borique est mesurée en ligne.
- la concentration en acide borique est mesuré hors ligne sur la base d'un échantillon.
- tous les effluents sont recyclés vers l'entrée d'un module membranaire lorsque l'efficacité du processus en sortie est mesurée inférieure aux objectifs de traitement.
- l'invention concerne également une installation adaptée pour la mise en oeuvre du procédé précité.

L'installation conforme à l'invention destinée à traiter des effluents provenant du circuit primaire d'une centrale nucléaire mettant en oeuvre une séparation d'acide borique à l'aide d'une membrane est caractérisée par le fait qu'elle comprend une pluralité d'étages composés de modules d'osmose inverses comprenant chacun une membrane présentant un taux de réjection élevé en Bore et des moyens de recyclage des produits intermédiaires en différents points l'installation.

## DESCRIPTION DES FIGURES

D'autres caractéristiques, buts et avantages de la présente invention apparaîtront à la lecture de la description détaillée qui va suivre et en regard des dessins annexés donnés à titre d'exemples non limitatifs et sur lesquels :

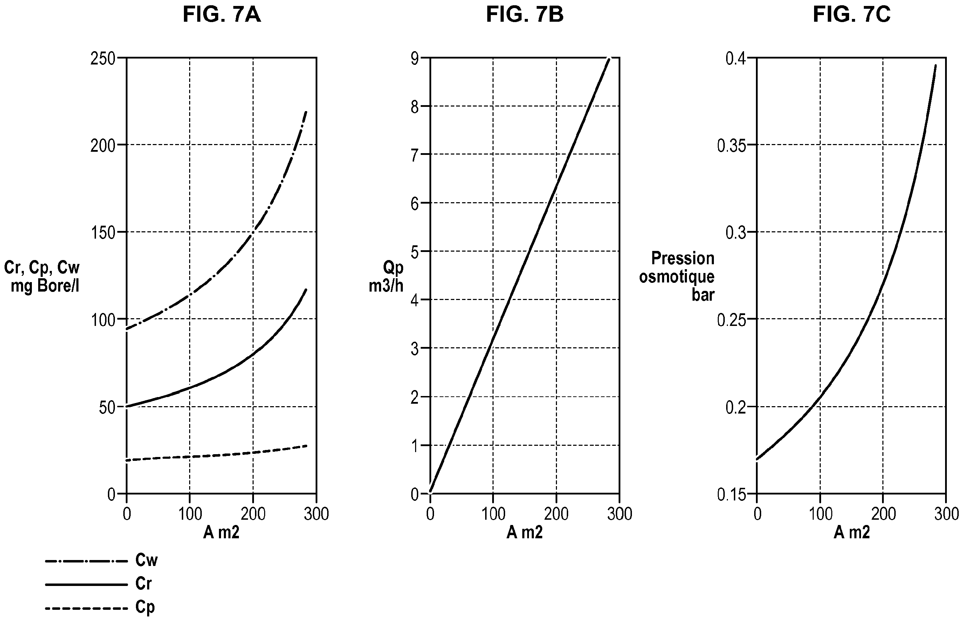

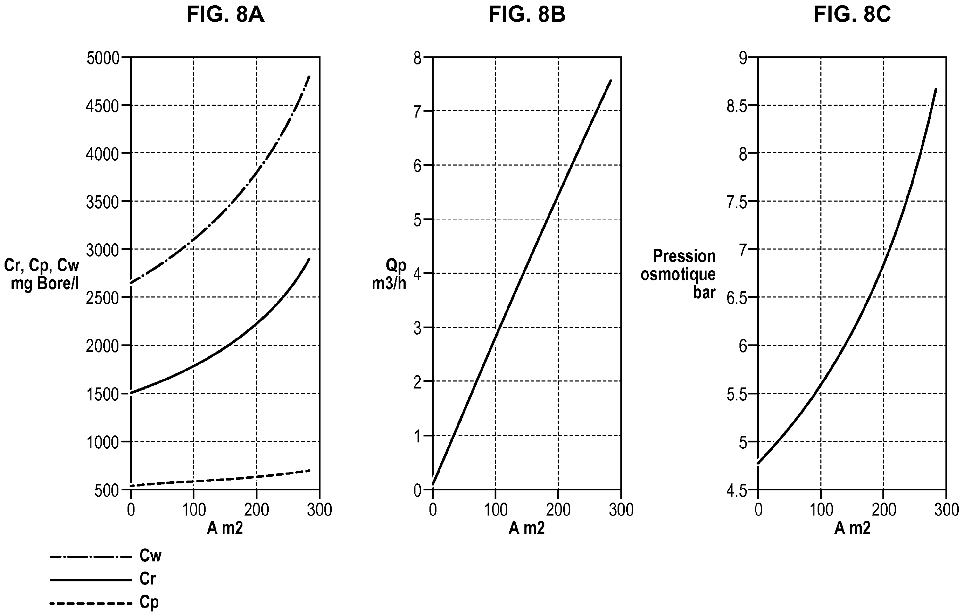

La figure 1 précédemment décrite représente schématiquement une installation conforme à l'état de la technique pour la séparation d'acide borique à l'aide d'un processus thermique,
Les figures 2 et 3 précédemment décrites représentent schématiquement un module d'osmose inverse, dans un mode de réalisation spiralée pour la figure 3,
La figure 4 illustre le phénomène de polarisation de concentration au voisinage d'une membrane,
Les figures 5 et 6 représentent deux exemples d'installation conformes à la présente invention comprenant respectivement un ensemble de quatre étages d'enrichissement et quatre étages d'appauvrissement et un ensemble de trois étages d'enrichissement et trois étages d'appauvrissement,
Les figures 7A, 7B et 7C et respectivement 8A, 8B et 8C représentent les simulations de concentration en acide borique aux rétentats Cr, à la membrane Cw et au perméat Cp pour
les figures associées à l'indice A, des simulations de débit aux perméats pour les figures associées à l'indice B et des simulations de pression osmotique pour les figures associées à l'indice C en fonction de la surface membranaire déployée sur un étage pour une alimentation en eau de 12 m$^3$/h à une concentration en acide borique de 50 mg$_B$/L pour les figures 7 et respectivement à 1500 mg$_B$/L pour les figures 8, et

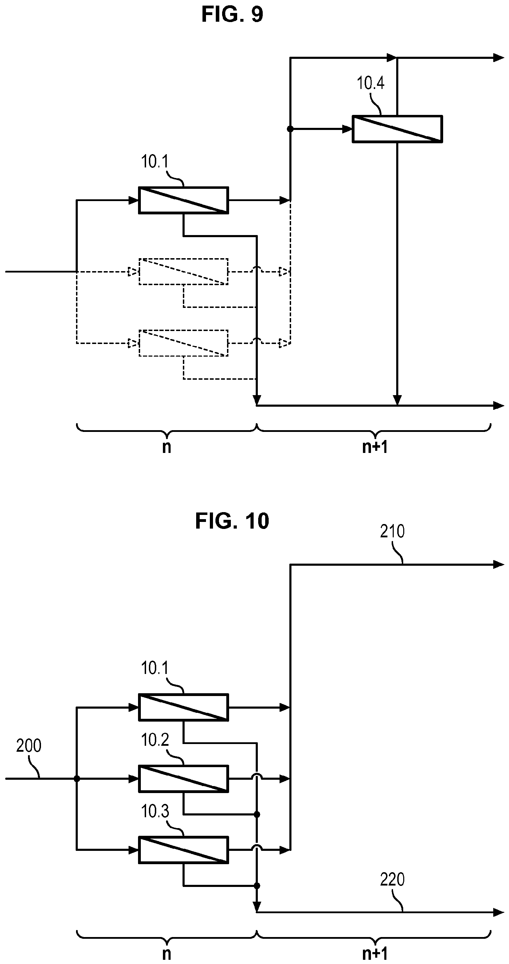

Les figures 9 et 10 représentent deux exemples de gestion des alimentations des modules dans les différents étages en fonction du débit et de la concentration en acide borique.

## DESCRIPTION DETAILLEE DE L'INVENTION

L'eau entrante, i.e. l'effluent à traiter, est originellement issue de décharges volontaires de fluide provenant du circuit d'eau primaire et contient de l'acide borique. La concentration en acide borique fluctue au cours de l'opération de la centrale nucléaire, dans une fourchette comprise entre 0 et 2000 mg$_B$/L (exprimé en masse de bore B par litre d'effluent).

L'objectif de l'invention est de produire conjointement :

- de l'acide borique concentré, par exemple à 7500 mg$_B$/L,
- de l'eau purifiée présentant peu d'acide borique, par exemple moins de 5 mg$_B$/L.

Il est proposé d'utiliser des techniques de séparation membranaire en lieu et place de la séparation thermique décrite dans l'état de la technique. La solution consiste à combiner de nouveaux composants technologiques ayant fait leurs preuves pour d'autres applications industrielles.

Dans la solution proposée, l'effluent est traité par un procédé multi-étage composés de modules d'osmose inverse présentant un taux de réjection élevé en Bore, agencés en parallèle et en série, et des recyclages des produits intermédiaires en différents points du procédé. Le traitement permet de générer conjointement de l'acide borique concentré et de l'eau purifiée, tous deux potentiellement réutilisables dans la centrale.

Les deux produits peuvent être réutilisés dans le réacteur nucléaire si les spécifications chimiques le permettent, ou être transféré vers une étape supplémentaire de traitement.

Dans l'invention, il est proposé d'utiliser des membranes d'osmose inverse présentant un fort taux réjection en Bore, développée et utilisée dans l'industrie du dessalement d'eau de mer. Ces membranes présentent des taux de réjection en Bore de l'ordre de 90%.

Le taux de réjection en Bore de la membrane $R_m$ est défini comme :

[Math. 1]

$$R_m = 1 - \frac{C_p}{C_m}$$

Où $C_p$ est la concentration en Bore côté perméat de la membrane et $C_m$ la concentration en Bore côté rétentat à la surface de la membrane.

La figure 4 illustre de manière schématique la membrane 12 définissant un côté rétentat 13 et un côté perméat 14. Le liquide du côté rétentat 13 s'écoule selon la direction 20, et du côté perméat le liquide s'écoule selon la direction 22. Une couche limite 24 à la surface de la membrane définit une zone où la distribution de vitesse côté rétentat 13 est influencée par la présence de la membrane 12.

Les membranes d'intérêt pour l'invention sont caractérisées par un taux de rejection en Bore supérieur aux membranes conventionnelles, de préférence supérieur à 80%. Les membranes commerciales actuelles présentent des taux de réjection élevés en Bore sont généralement des membranes composites constituées d'un support (par exemple en polysulfone) recouvert d'un film dense offrant une sélectivité vis-à-vis du Bore (par exemple en polyamide, polyisobutylene).

Le dispositif décrit s'applique à tout type de matériau présentant une permsélectivité (différence de vitesse de passage d'eau et de bore en régime permanent), mis en oeuvre dans une cascade membranaire pour laquelle les différents étages sont équipés d'un seul ou de différents matériaux permsélectifs. Les matériaux employés peuvent être du type organique (membranes polymères asymétriques ou composites de type polyamide, polyimide, polysulfone, polymères fluorés, polymères silicones, polymères vinyliques, polymères cellulosiques...), inorganique (tamis moléculaires carbonés, graphènes, zeolithes, silice poreuse native ou fonctionnalisée...), de structures homogènes ou hétérogènes. Le caractère hétérogène englobe les membranes chargées de type Mixed Matrix Membranes (avec une phase dispersée de type nanoparticules ou polymères fonctionnels du type aquaporines...) ou des matériaux ayant subi un traitement de surface pour améliorer les performances (fluoration, bromination, sulfonation ou tout type de fonctionnalisation...).

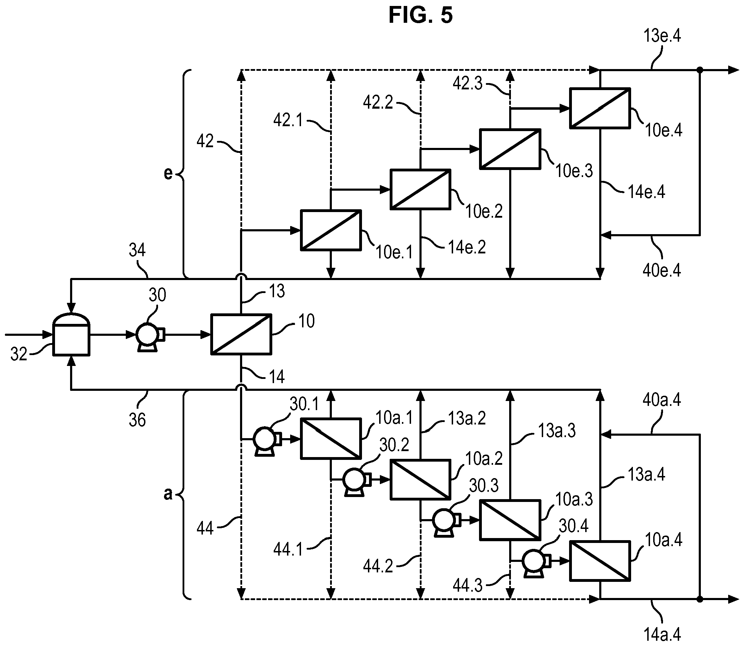

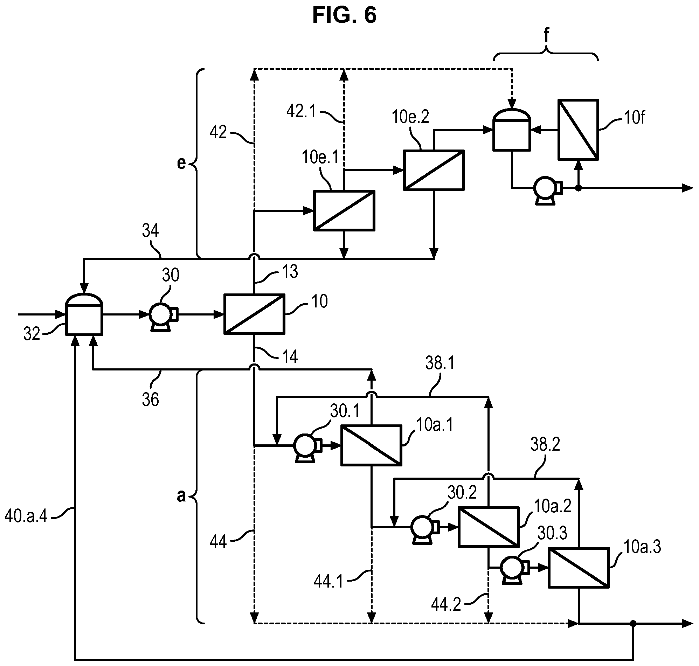

Le procédé proposé met en oeuvre un assemblage multi étages ou architecture de modules d'osmose inverse sélectifs au Bore. Des exemples d'une telle architecture sont représentés aux figures 5 et 6.

La figure 5 présente un procédé utilisant un assemblage multi-étage de 4 étages d'enrichissement, 4 étages d'appauvrissement, les perméats dans la zone d'enrichissement et les rétentats dans la zone d'appauvrissement sont recyclés totalement à l'alimentation du procédé. Chaque étage d'enrichissement et d'appauvrissement génère des produits intermédiaires, correspondants aux deux sorties-le rétentat et le perméat- de chaque étage. A chaque étage de la zone d'enrichissement, le produit intermédiaire d'intérêt principal est le rétentat (puisqu'il est plus concentré en acide borique que l'alimentation dudit étage) et le produit intermédiaire d'intérêt secondaire est le perméat (puisqu'il est plus dilué en acide borique que l'alimentation dudit étage). Inversement, à chaque étage de la zone d'appauvrissement, le produit intermédiaire d'intérêt principal est le perméat et le produit intermédiaire d'intérêt secondaire est le rétentat.

Il est possible de créer un recyclage total d'un produit intermédiaire, c'est-à-dire de renvoyer le débit total d'un produit intermédiaire généré à un étage vers l'alimentation d'un étage situé plus en amont. C'est le cas dans la situation de la figure 5 pour les produits intermédiaires d'intérêt secondaires qui sont renvoyés à l'alimentation générale du procédé.

Il est possible de créer un recyclage partiel, c'est-à-dire de renvoyer une partie du débit total d'un produit intermédiaire généré à un étage vers l'alimentation d'un étage situé plus en amont vers l'alimentation. C'est le cas des connexions 40e.4 et 40a.4.

Il est possible de créer un contournement total ou partiel c'est-à-dire d'envoyer tout ou une partie du débit total d'un produit intermédiaire généré à un étage vers une sortie du procédé. C'est le cas des connexions 44, 44.1, 44.2, 44.3, 42, 42.1, 42.2 ou 42.3.

La figure 6 présente un procédé utilisant un assemblage multi-étage de 3 étages d'enrichissement, 3 étages d'appauvrissement, les perméats dans la zone d'enrichissement e sont recyclés totalement à l'alimentation du procédé, les rétentats dans la zone d'appauvrissement sont recyclés à l'alimentation du module précédent leur module de sortie. Sont également présents des recyclages partiels vers l'alimentation (traits gris), et des contournements (40a.4). Un étage de finition f est disposé en fin de zone d'enrichissement, avec recyclage du rétentat de l'étage à l'alimentation de ce même étage, permettant de réaliser de façon transitoire un traitement à travers un étage d'osmose inverse de finition 10f, circulant en circuit fermé sur ce réservoir, jusqu'à obtention de la concentration cible en acide borique.

D'une manière générale, il existe différentes options possibles d'architecture ou d'assemblages multi-étage qui sont présentées ci-après et numérotées de 1 à 9.

1) la présence d'une zone d'enrichissement e et d'une zone d'appauvrissement a, chacune composée de plusieurs modules membranaires. Les zones peuvent par exemple être définies à partir de la sortie d'un premier module d'osmose inverse 10. La sortie rétentat 13 est envoyée vers la zone d'enrichissement e, et la sortie perméat est envoyée vers la zone d'appauvrissement a. Un module d'alimentation 32 et une pompe 30 permettent d'alimenter en effluent à traiter le module 10.

2) la zone d'enrichissement est chargée d'augmenter progressivement la concentration en acide borique et est composée d'un ou plusieurs étages en série 10e.1, 10e.2, 10e.3, et 10e.4 pour atteindre les spécifications sur la concentration en acide borique. Deux modules sont ici agencés en série lorsque la sortie rétentat d'un module est envoyée vers l'entrée du module suivant dans la série.

3) la zone d'appauvrissement est chargée de réduire progressivement la concentration en acide borique et est composée d'un ou plusieurs étages en série 10a.1, 10a.2, 10a.3, et 10a.4 pour atteindre les spécifications sur l'eau purifiée. Deux modules sont ici agencés en série lorsque la sortie perméat d'un module est envoyée vers l'entrée du module suivant dans la série, éventuellement en passant au travers d'une pompe 30.1, 30.2, etc...

4) chaque étage se compose d'un ou plusieurs modules en parallèle pour traiter le débit circulant à chaque étage. Sur les figures 5 et 6, seul un module d'osmose inverse est représenté par étage mais il peut y en avoir plusieurs disposés en parallèle. Un agencement de trois modules en parallèle est représenté sur la figure 10. Les trois entrées des modules 10.1, 10.2 et 10.3 sont reliées ensemble à un canal d'entrée 200, de même que les trois sorties rétentat sont reliées ensemble à un canal rétentat 220 et les trois sorties perméat sont reliées ensemble à un canal perméat 210. Un tel agencement présente une seule entrée 200, une sortie rétentat 220 et une sortie perméat 210, à la manière d'un module d'osmose inverse unique. Il est ainsi possible de remplacer un module d'osmose inverse unique par un agencement de 3 modules, voire davantage, disposés en parallèle.

5) dans la zone d'enrichissement e, le perméat 14.e.1, 14.e.2, 14.e.3... de chaque module peut être recyclé

   ◦ . après mélange avec l'alimentation du procédé (par exemple en utilisant le canal 34 dans les figures 5 et 6) ;
   ◦ . après mélange avec l'alimentation d'un autre module du procédé ;
   ◦ . à l'une des sorties du procédé ;

6) dans la zone d'appauvrissement a, le rétentat 13.a.1, 13.a.2, 13.a.3... de chaque module peut être recyclé

   ◦ . après mélange avec l'alimentation du procédé (par exemple en utilisant le canal 36 dans les figures 5 et 6) ;
   ◦ . après mélange avec l'alimentation d'un autre module du procédé (par exemple en utilisant les canaux 38.1 et 38.2 dans la figure 6) ;
   ◦ . à l'une des sorties du procédé ;

7) chaque produit du procédé, l'acide borique concentré et l'eau purifiée, peut être partiellement recyclé en tout point du procédé (par exemple en utilisant les canaux 40e.4 et 40a.4 dans les figures 5 et 6),

8) les rétentats des modules dans la zone d'enrichissement peuvent contourner (*by-pass*) les modules en série situés en amont pour rejoindre directement la sortie du procédé correspondant à l'acide borique concentré (par exemple en utilisant les canaux 42, 42.1, 42.2 et 42.3 dans les figures 5 et 6),

9) les perméats des modules dans la zone d'enrichissement peuvent contourner (*by-pass*) les modules en série situés en amont pour rejoindre directement la sortie du procédé correspondant à l'eau purifiée (par exemple en utilisant les canaux 44, 44.1, 44.2 et 44.3 dans les figures 5 et 6),

Le choix parmi ces différentes options possibles d'architecture ou d'assemblage multi-étage de 1 à 6 permet de respecter les spécifications du procédé vis-à-vis de la concentration cible en acide borique concentré et dans l'eau purifiée. Les caractéristiques 7 à 9 permettent le pilotage du procédé, de façon à adapter les conditions opératoires en fonction de la concentration en acide borique à l'alimentation du procédé (fluctuante dans le temps).

Pour assurer le passage de l'eau à travers la membrane, il faut que la différence de pression hydraulique de part et d'autre de la membrane soit supérieure à la différence de pression osmotique (dépendante des concentrations en acide borique et des sels dissous en solution) de part et d'autre de la membrane.

La surface membranaire nécessaire à chaque étage est calculée de manière à atteindre le taux de récupération souhaité connaissant le débit à traiter et la pression transmembranaire appliquée.

Le taux de récupération est le rapport entre le débit au perméat d'un étage et son débit d'alimentation.

Les figures 7A, 7B, 7C, 8A, 8B et 8C présentent des résultats de simulation pour un étage d'osmose, en utilisant les données suivantes (il s'agit de valeurs de référence déterminées à partir de mesures expérimentales en laboratoire et correspondant à un dimensionnement dans un cas défavorable) : perméabilité de l'eau $2,2.10^{-12}$ m/Pa/s ; taux de réjection de 0,8 ; coefficient de transfert de masse $10^{-5}$ m/s (pour le calcul de la polarisation de concentration). Les courbes correspondent à une alimentation en eau de 12 m$^3$/h avec une concentration en acide borique comprise entre 50 mg$_B$/L (figures 7A, 7B, 7C) et 1500 mg$_B$/L (figures 8A, 8B, 8C) pour une différence de pression transmembranaire de 40 bars (supérieure à la différence de pression osmotique).

L'augmentation de la surface membranaire permet d'augmenter le débit au perméat (et donc le taux de récupération) et la concentration au rétentat. En contrepartie, la concentration au perméat augmente également, de même que la pression osmotique.

Une fois les paramètres caractéristiques de la membrane déterminés à partir de mesures expérimentales (perméabilité de l'eau, taux de réjection, coefficient de transfert de masse), ce type de simulation permet de choisir les meilleures conditions pour atteindre les spécifications désirées.

La mise en oeuvre à l'échelle du procédé se fait en choisissant une architecture ou un assemblage multi étages de procédé parmi les possibilités décrites ci-avant, et en définissant à chaque étage les pressions hydrauliques ainsi que les surfaces membranaires déployées :

- Les pressions hydrauliques doivent être supérieures à 1 bar et inférieures à 80 bars, préférentiellement entre 5 et 50 bars

- Le taux de récupération pour chaque étage doit préférentiellement être inférieur à 90%

- Les taux de recyclages, i.e. la fraction du débit recyclée vers l'alimentation, de chaque produit peuvent varier de 0 à 99%, préférentiellement de 0 à 50%

Ces choix doivent permettre d'assurer les performances de séparation du procédé quelle que soit la concentration en acide borique à l'alimentation du procédé. Les conditions opératoires peuvent être adaptées au cours du temps de manière à gérer cette fluctuation temporelle.

Le pilotage du procédé a pour vocation de mesurer l'efficacité de séparation du procédé, ainsi que d'adapter les conditions opératoires afin de maintenir les concentrations cibles en acide borique concentré et eau purifiée malgré la variation de la concentration en acide borique à l'alimentation.

L'efficacité de séparation du système peut être contrôlée en mesurant (en continu ou par prélèvements ponctuels) les concentrations en substances d'intérêt en différents points du procédé. La concentration en acide borique peut être mesurée en entrée du système d'osmose inverse, ainsi qu'au niveau des sorties en acide borique concentrée et eau purifiée. Des mesures intermédiaires peuvent également compléter ces informations. La concentration en acide borique peut-être mesurée directement (par exemple par dosage) ou indirectement (par exemple via le pH), en ligne ou hors-ligne à l'aide d'un échantillonnage adapté.

D'une part, l'effet de la fluctuation de la concentration à l'alimentation du procédé peut être compensé via la gestion de l'alimentation des modules d'osmose. En fonction de la concentration en acide borique à l'alimentation du procédé, un même étage se verra alimenté par des débits et concentrations fluctuantes.

De façon générale, il convient d'augmenter le nombre de modules en parallèle sur un même étage lorsque le débit est plus élevé, de façon à disposer de plus de surfaces membranaires. Il convient également d'augmenter le nombre d'étages en série quand les objectifs de séparation sont plus difficiles à atteindre. C'est le cas notamment lorsque la concentration en acide borique est plus faible dans la zone d'enrichissement, ou plus élevée dans la zone d'appauvrissement. La figure 9 illustre la situation de deux modules d'osmose inverse disposés en série, selon deux étages consécutifs n et n+1. La figure 10 illustre la situation de trois modules d'osmose inverse disposés en parallèle, selon deux étages consécutifs n et n+1, l'étage n+1 ne comprenant aucun module d'osmose inverse. L'architecture ou l'assemblage multi-étage de la figure 9 est plus adaptée que celle de la figure 10 lorsque le débit à traiter est moins important et que les objectifs de séparation sont plus difficiles à atteindre.

D'autre part, les paramètres opératoires peuvent être ajustés, comme les taux de recyclages de chacun des produits du procédé, ainsi que les pressions opératoires (via l'utilisation de pompes d'alimentation et de vannes réglables).

Enfin, en cas d'efficacité mesurée inférieure aux objectifs de traitement, tous les effluents peuvent être recyclés vers l'alimentation pour augmenter le temps de passage des effluents dans le procédé.

Les avantages de la solution proposée par rapport aux procédés concernent :

- La compacité : les modules membranaires déploient généralement des surfaces d'échanges entre phases de plusieurs milliers de m$^2$ par m$^3$, contre quelques centaines pour les garnissages et plateaux des procédés thermiques. En particulier, les procédés thermiques par évaporation nécessitent une hauteur de l'ordre de 10 mètres, contre environ 2 mètres pour les procédés membranaires. Cet aspect permet notamment de réduire le coût du géniecivil.

- La dépense énergétique : le procédé fonctionne à une température proche de la température ambiante et ne nécessite pas de vaporiser une partie d'une phase liquide. Le procédé consomme quelques centaines de kilowatts électriques, contre plusieurs mégawatts thermiques pour l'évaporation.

- La modularité du système, permettant d'adapter facilement la conception et l'exploitation.

- La flexibilité, en s'affranchissant des contraintes hydrodynamique (engorgement, pleurage) des procédés thermiques.

- Des gains économiques sur le coût d'investissement (moins encombrant, contacteur gaz/liquide en plastique au lieu d'aciers) et les coûts opératoires sur les servitudes (pas de besoin de vapeur, moins énergivore).

Dans le cadre de la présente invention, lorsque des valeurs sont indiquées, elles doivent être considérées comme donnant une valeur indicative susceptible d'évoluer dans une fourchette de l'ordre de plus ou moins 10% de la valeur indiquée.

## Revendications

1. Procédé de traitement d'effluents aqueux provenant du circuit primaire d'une centrale nucléaire mettant en oeuvre une séparation d'acide borique à l'aide d'une membrane d'osmose inverse **caractérisé par le fait qu'**il comprend des étapes consistant à traiter les effluents à l'aide d'un assemblage multi-étage composé de modules d'osmose inverse comportant une membrane présentant un taux de réjection élevé en Bore, agencés en parallèle et en série et des recyclages des produits intermédiaires en différents points de l'assemblage.

2. Procédé de traitement d'effluents selon la revendication 1 comprenant une étape de filtrage de l'acide borique par osmose inverse de façon à concentrer l'acide borique à une concentration de l'ordre de 7 500 mg$_B$/L en sortie d'un module d'osmose inverse et déconcentrer l'acide borique à une concentration d'acide borique de l'ordre de 5 mg$_B$/L en sortie d'un autre module d'osmose inverse.

3. Procédé de traitement d'effluents selon la revendication 1 ou 2 dans lequel les effluents à traiter ont un pH très inférieur au pKa de l'acide borique.

4. Procédé de traitement d'effluents selon l'une des revendications précédentes dans lequel le taux de rejection en Bore des membranes est supérieur à 80%, de préférence supérieur à 90%.

5. Procédé de traitement d'effluents selon l'une des revendications précédentes dans lequel les membranes sont composées d'un support, par exemple en polysulfone, recouvert d'un film dense offrant une sélectivité vis-à-vis du Bore, par exemple en polyamide ou polyisobutylène.

6. Procédé de traitement d'effluents selon l'une des revendications précédentes dans lequel les membranes sont formées d'un matériau du type organique, telles que des membranes à base de polymère asymétrique ou composite de type polyamide, polyimide, polysulfone, polymère fluoré, polymère silicone, polymère vinylique, polymère cellulosique, inorganique tel que tamis moléculaires carbonés, graphènes, zeolithes, silice poreuse native ou fonctionnalisée, sous forme de structures homogènes ou hétérogènes, telles que des membranes chargées, notamment avec une phase dispersée de type nanoparticules ou polymères fonctionnels du type aquaporines ou des matériaux ayant subi un traitement en surface pour améliorer les performances, par exemple à base de fluoration, bromination ou sulfonation.

**7.** Procédé de traitement d'effluents selon l'une des revendications précédentes qui met en oeuvre d'une part, une zone d'enrichissement en acide borique et une zone d'appauvrissement en acide borique, chacune composée de plusieurs modules d'osmose inverse, la zone d'enrichissement étant chargée d'augmenter progressivement la concentration d'acide borique et étant formée d'un ou plusieurs étages en série pour atteindre la concentration d'acide borique recherchée, tandis que la zone d'appauvrissement opère une réduction progressive de la concentration d'acide borique et est composée d'un ou plusieurs étages en série pour atteindre la concentration d'eau purifiée requise.

**8.** Procédé de traitement d'effluents selon la revendication 7 dans lequel chaque étage se compose d'un nombre de modules d'osmose inverse disposés en parallèle adapté pour traiter le débit circulant à chaque étage.

**9.** Procédé de traitement d'effluents selon la revendication 7 ou 8 dans lequel, au sein de la zone d'enrichissement, le perméat de chaque module d'osmose inverse est recyclé après mélange avec l'alimentation du procédé ou après mélange avec l'alimentation d'un autre module d'osmose inverse du procédé ou à l'une des sorties du procédé.

**10.** Procédé de traitement d'effluents selon l'une des revendications 7 à 9 dans lequel, au sein de la zone d'appauvrissement, le rétentat de chaque module d'osmose inverse est recyclé après mélange avec l'alimentation du procédé ou après mélange avec l'alimentation d'un autre module d'osmose inverse du procédé ou à l'une des sorties du procédé.

**11.** Procédé de traitement d'effluents selon l'une des revendications 7 à 10 dans lequel les rétentats du module d'osmose inverse dans la zone d'enrichissement contournent au moins certains modules d'osmose inverse en série situés en aval pour rejoindre directement la sortie du procédé correspondant à l'acide borique concentré.

**12.** Procédé de traitement d'effluents selon l'une des revendications 7 à 11 dans lequel les perméats des modules dans la zone d'appauvrissement contournent au moins un certain module d'osmose inverse en série situé en aval pour rejoindre directement la sortie du procédé correspondant à l'eau purifiée.

**13.** Procédé de traitement d'effluents selon l'une des revendications précédentes comprenant en outre des étapes consistant à mesurer la concentration en acide borique sur des points sélectionnés de l'installation et opérer sur la base du résultat des mesures de concentration une étape de pilotage des modules de l'assemblage actif afin d'optimiser la concentration d'acide borique en sortie.

**14.** Procédé de traitement d'effluents selon la revendication 13 dans lequel les mesures de concentration sont opérées en entrée et en sortie de l'assemblage de modules d'osmose inverse.

**15.** Procédé de traitement d'effluents selon la revendication 13 ou 14, dans lequel les mesures de concentration sont opérées sur des points intermédiaires de l'assemblage de modules membranaires.

**16.** Procédé de traitement d'effluents selon l'un des revendications 13 à 15 dans lequel la concentration en acide borique est mesurée directement, par exemple par dosage.

**17.** Procédé de traitement d'effluents selon l'un des revendications 13 à 16 dans lequel la concentration d'acide borique est mesurée indirectement, par exemple via le PH.

**18.** Procédé de traitement d'effluents selon l'un des revendications 13 à 17 dans lequel la concentration en acide borique est mesurée en ligne.

**19.** Procédé de traitement d'effluents selon l'un des revendications 13 à 18 dans lequel la concentration en acide borique est mesurée hors ligne sur la base d'un échantillon.

**20.** Procédé de traitement d'effluents selon l'un des revendications 13 à 19 dans lequel tous les effluents sont recyclés vers l'entrée d'un module membranaire lorsque l'efficacité du processus en sortie est mesurée inférieure aux objectifs de traitement.

21. Installation de traitement d'effluents aqueux provenant du circuit primaire d'une centrale nucléaire mettant en oeuvre une séparation d'acide borique selon l'une des revendications 1 à 20 à l'aide d'une membrane **caractérisée par le fait qu'**elle comprend une pluralité d'étages composés de modules d'osmose inverses comprenant chacun une membrane présentant un taux de réjection élevé en Bore et des moyens de recyclage des produits intermédiaires en différents points de l'installation.

**Patentansprüche**

1. Verfahren zur Behandlung von wässrigen Abwässern aus dem Primärkreislauf eines Kernkraftwerks, bei dem eine Abtrennung von Borsäure mit Hilfe einer Umkehrosmosemembran durchgeführt wird, **dadurch gekennzeichnet, dass** es Schritte umfasst, die darin bestehen, die Abwässer mit Hilfe eines mehrstufigen Aufbaus zu behandeln, der aus Umkehrosmosemodulen besteht, die eine Membran mit einem hohen Borrejektionsgrad umfassen, die parallel und in Reihe angeordnet sind, und aus Rückführungen der Zwischenprodukte an verschiedenen Punkten des Aufbaus.

2. Verfahren zur Behandlung von Abwässern nach Anspruch 1, umfassend einen Schritt des Filterns von Borsäure durch Umkehrosmose, so dass die Borsäure auf eine Konzentration in der Größenordnung von 7500 mgB/L am Ausgang eines Umkehrosmosemoduls konzentriert wird und die Borsäure auf eine Borsäurekonzentration in der Größenordnung von 5 mgB/L am Ausgang eines anderen Umkehrosmosemoduls dekonzentriert wird.

3. Verfahren zur Behandlung von Abwässern nach Anspruch 1 oder 2, wobei das zu behandelnde Abwasser einen pH-Wert aufweist, der weit unter dem pKa-Wert von Borsäure liegt.

4. Verfahren zur Behandlung von Abwässern nach einem der vorhergehenden Ansprüche, bei dem die Bor-Rückweisungsrate der Membranen mehr als 80%, vorzugsweise mehr als 90%, beträgt.

5. Verfahren zur Behandlung von Abwässern nach einem der vorhergehenden Ansprüche, bei dem die Membranen aus einem Träger, z. B. aus Polysulfon, bestehen, der mit einem dichten Film bedeckt ist, der eine Selektivität für Bor bietet, z. B. aus Polyamid oder Polyisobutylen.

6. Verfahren zur Behandlung von Abwässern nach einem der vorhergehenden Ansprüche, bei dem die Membranen aus einem Material des organischen Typs gebildet werden, wie z. B. Membranen auf der Basis von asymmetrischen Polymeren oder Verbundpolymeren vom Typ Polyamid, Polyimid, Polysulfon, Fluorpolymer, Silikonpolymer, Vinylpolymer, Zellulosepolymer, anorganischem Material wie kohlenstoffhaltigen Molekularsieben, Graphene, Zeolithe, natives oder funktionalisiertes poröses Siliziumdioxid, in Form von homogenen oder heterogenen Strukturen, wie z. B. Membranen, die insbesondere mit einer dispersen Phase vom Typ Nanopartikel oder funktionellen Polymeren vom Typ Aquaporine beladen sind, oder Materialien, die einer Oberflächenbehandlung zur Leistungssteigerung unterzogen wurden, z. B. auf der Basis von Fluorierung, Bromierung oder Sulfonierung.

7. Verfahren zur Behandlung von Abwässern nach einem der vorhergehenden Ansprüche, bei dem einerseits eine Borsäure-Anreicherungszone und eine Borsäure-Abreicherungszone eingesetzt werden, die jeweils aus mehreren Umkehrosmose-Modulen bestehen, wobei die Anreicherungszone für die allmähliche Erhöhung der Borsäurekonzentration verantwortlich ist und aus einer oder mehreren in Reihe geschalteten Stufen besteht, um die angestrebte Borsäurekonzentration zu erreichen, während die Abreicherungszone eine allmähliche Verringerung der Borsäurekonzentration bewirkt und aus einer oder mehreren in Reihe geschalteten Stufen besteht, um die erforderliche Konzentration an gereinigtem Wasser zu erreichen.

8. Verfahren zur Behandlung von Abwässern nach Anspruch 7, bei dem jede Stufe aus einer Anzahl von parallel angeordneten Umkehrosmosemodulen besteht, die geeignet sind, den in jeder Stufe zirkulierenden Durchfluss zu behandeln.

9. Verfahren zur Behandlung von Abwässern nach Anspruch 7 oder 8, bei dem innerhalb der Anreicherungszone das Permeat jedes Umkehrosmosemoduls nach Vermischung mit der Prozessbeschickung oder nach Vermischung mit der Beschickung eines anderen Umkehrosmosemoduls des Prozesses oder zu einem der Prozessauslässe zurückgeführt wird.

**10.** Verfahren zur Behandlung von Abwässern nach einem der Ansprüche 7 bis 9, bei dem innerhalb der Abreicherungszone das Retentat jedes Umkehrosmosemoduls nach Vermischung mit der Prozessbeschickung oder nach Vermischung mit der Beschickung eines anderen Umkehrosmosemoduls des Verfahrens oder an einem der Ausgänge des Verfahrens zurückgeführt wird.

**11.** Verfahren zur Behandlung von Abwässern nach einem der Ansprüche 7 bis 10, bei dem die Retentate des Umkehrosmosemoduls in der Anreicherungszone mindestens einige stromabwärts gelegene serielle Umkehrosmosemodule umgehen, um direkt zum Prozessausgang zu gelangen, der der konzentrierten Borsäure entspricht.

**12.** Verfahren zur Behandlung von Abwässern nach einem der Ansprüche 7 bis 11, bei dem die Permeate der Module in der Abreicherungszone mindestens ein bestimmtes stromabwärts gelegenes serielles Umkehrosmosemodul umgehen, um direkt in den dem gereinigten Wasser entsprechenden Prozessauslass zu gelangen.

**13.** Verfahren zur Behandlung von Abwässern nach einem der vorhergehenden Ansprüche, das außerdem die Schritte umfasst, die darin bestehen, die Konzentration von Borsäure an ausgewählten Punkten der Anlage zu messen und auf der Grundlage des Ergebnisses der Konzentrationsmessungen einen Schritt zur Steuerung der Module der aktiven Anordnung durchzuführen, um die Konzentration der Borsäure am Ausgang zu optimieren.

**14.** Verfahren zur Behandlung von Abwässern nach Anspruch 13, bei dem die Konzentrationsmessungen am Eingang und am Ausgang der Umkehrosmosemodulanordnung durchgeführt werden.

**15.** Verfahren zur Behandlung von Abwässern nach Anspruch 13 oder 14, bei dem die Konzentrationsmessungen an Zwischenpunkten der Membranmodulanordnung durchgeführt werden.

**16.** Verfahren zur Behandlung von Abwässern nach einem der Ansprüche 13 bis 15, bei dem die Borsäurekonzentration direkt gemessen wird, z. B. durch Dosierung.

**17.** Verfahren zur Behandlung von Abwässern nach einem der Ansprüche 13 bis 16, bei dem die Borsäurekonzentration indirekt, z. B. über PH, gemessen wird.

**18.** Verfahren zur Behandlung von Abwässern nach einem der Ansprüche 13 bis 17, bei dem die Borsäurekonzentration online gemessen wird.

**19.** Verfahren zur Behandlung von Abwässern nach einem der Ansprüche 13 bis 18, bei dem die Borsäurekonzentration offline auf Basis einer Probe gemessen wird.

**20.** Verfahren zur Behandlung von Abwässern nach einem der Ansprüche 13 bis 19, bei dem das gesamte Abwasser zum Einlass eines Membranmoduls zurückgeführt wird, wenn die Effizienz des Auslassprozesses gemessen wird, die unter den Behandlungszielen liegt.

**21.** Anlage zur Behandlung von wässrigen Abwässern aus dem Primärkreislauf eines Kernkraftwerks, die eine Abtrennung von Borsäure nach einem der Ansprüche 1 bis 20 mit Hilfe einer Membran durchführt, **dadurch gekennzeichnet, dass** sie eine Vielzahl von Stufen umfasst, die aus Umkehrosmose-Modulen bestehen, die jeweils eine Membran mit einer hohen Bor-Ausscheidungsrate und Mittel zur Rückführung der Zwischenprodukte an verschiedenen Punkten der Anlage umfassen.

**Claims**

**1.** Process for the treatment of aqueous effluents from the primary circuit of a nuclear power plant implementing a separation of boric acid using a reverse osmosis membrane, **characterized in that** it comprises steps consisting in treating the effluents using a multistage assembly composed of reverse osmosis modules comprising a membrane with a high boron rejection rate, arranged in parallel and in series, and recycling of the intermediate products at different points in the assembly.

**2.** Effluent treatment process according to claim 1 comprising a step of filtering boric acid by reverse osmosis so as to concentrate the boric acid to a concentration of the order of 7,500 mgB/L at the outlet of a reverse osmosis module and deconcentrate the boric acid to a boric acid concentration of the order of 5 mgB/L at the outlet of another reverse osmosis module.

3. The effluent treatment process of claim 1 or 2 wherein the effluent to be treated has a pH much lower than the pKa of boric acid.

4. Effluent treatment process according to one of the preceding claims in which the Boron rejection rate of the membranes is greater than 80%, preferably greater than 90%.

5. Effluent treatment process according to one of the preceding claims in which the membranes are composed of a support, for example made of polysulfone, covered with a dense film offering selectivity with respect to boron, for example made of polyamide or polyisobutylene.

6. Process for treating effluents according to one of the preceding claims, in which the membranes are formed from a material of the organic type, such as membranes based on asymmetrical or composite polymers of the polyamide, polyimide, polysulfone, fluorinated polymer, silicone polymer, vinyl polymer, cellulosic polymer, inorganic such as carbon molecular sieves, graphenes, zeolites, native or functionalized porous silica, in the form of homogeneous or heterogeneous structures, such as charged membranes, in particular with a dispersed phase of the nanoparticle type or functional polymers of the aquaporin type, or materials which have undergone a surface treatment to improve performance, for example based on fluorination, bromination or sulfonation

7. Effluent treatment process according to one of the preceding claims which implements, on the one hand, a boric acid enrichment zone and a boric acid depletion zone, each composed of several reverse osmosis modules the enrichment zone being responsible for progressively increasing the boric acid concentration and being formed of one or more stages in series to reach the desired boric acid concentration, whereas the depletion zone operates a progressive reduction of the boric acid concentration and is composed of one or more stages in series to reach the required purified water concentration.

8. The effluent treatment process of claim 7 wherein each stage consists of a number of reverse osmosis modules arranged in parallel adapted to handle the flow rate circulating at each stage.

9. The effluent treatment process of claim 7 or 8 wherein, within the enrichment zone, the permeate from each reverse osmosis module is recycled after mixing with the process feed or after mixing with the feed of another reverse osmosis module of the process or to one of the process outlets.

10. The effluent treatment process of any of claims 7 to 9 wherein, within the depletion zone, the retentate from each reverse osmosis module is recycled after mixing with the process feed or after mixing with the feed to another reverse osmosis module of the process or to one of the process outlets.

11. The effluent treatment process of any of claims 7 to 10 wherein the retentate from the reverse osmosis module in the enrichment zone bypasses at least some downstream reverse osmosis modules in series to directly join the process outlet corresponding to concentrated boric acid.

12. The effluent treatment process of any of claims 7 to 11 wherein the permeates from the modules in the depletion zone bypass at least some downstream serial reverse osmosis module to directly join the process outlet corresponding to purified water.

13. The effluent treatment process according to any of the preceding claims further comprising steps of measuring the boric acid concentration at selected points of the plant and operating on the basis of the result of the concentration measurements a step of driving the modules of the active assembly in order to optimize the boric acid concentration at the outlet.

14. The effluent treatment process of claim 13 wherein the concentration measurements are operated at the inlet and outlet of the reverse osmosis module assembly.

15. The effluent treatment process of claim 13 or 14 wherein the concentration measurements are performed at intermediate points of the membrane module assembly.

16. The effluent treatment process of any of claims 13 to 15 wherein the boric acid concentration is measured directly, for example by assay.

17. The effluent treatment process of any of claims 13 to 16 wherein the boric acid concentration is measured indirectly, for example via PH.

18. The effluent treatment process of any of claims 13 to 17 wherein the boric acid concentration is measured on-line.

19. The effluent treatment process of any of claims 13 to 18 wherein the boric acid concentration is measured off-line based on a sample.

20. The effluent treatment process of any of claims 13 to 19 wherein all effluent is recycled back to the inlet of a membrane module when the process efficiency at the outlet is measured to be less than the treatment objectives.

21. Installation for the treatment of aqueous effluents from the primary circuit of a nuclear power station implementing a separation of boric acid according to one of claims 1 to 20 by means of a membrane, **characterized in that** it comprises a plurality of stages composed of reverse osmosis modules each comprising a membrane having a high boron rejection rate and means for recycling the intermediate products to different points in the installation.

# FIG. 1
## Etat de la technique

# FIG. 2
## Etat de la technique

# FIG. 3
## Etat de la technique

# FIG. 4

FIG. 5

FIG. 6

EP 3 891 764 B1

FIG. 7A — Cr, Cp, Cw mg Bore/l vs A m2

FIG. 7B — Qp m3/h vs A m2

FIG. 7C — Pression osmotique bar vs A m2

—·—·— Cw

——— Cr

- - - - - Cp

EP 3 891 764 B1

**FIG. 8A**

**FIG. 8B**

**FIG. 8C**

EP 3 891 764 B1

## FIG. 9

## FIG. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3380889 A
- JP H0568974 A

**Littérature non-brevet citée dans la description**

- Processing of nuclear power plant waste streams containing boric acid. *IAEA-TECDOC-911,* Octobre 1996
- **SARKA BARTOVA.** Reverse osmosis for the recovery of boric acid from the primary coolant of nuclear power plants. *Nuclear Engineering and Design,* 2016, vol. 300, 107-116
- **ULRIKA BARK ; RUNE DERGSTRÖM.** Best Available Technique Minimising All Nuclides. Swedish Environmental Research Institute, Avril 2006
- Best Available Technique Minimising All Nuclides. *IAEA-TECDOC-911*